# EUROPEAN PATENT APPLICATION

(11) **EP 3 498 935 A1**
(43) Date of publication of application: **19.06.2019**
(21) Application number: 17397532.7
(22) Date of filing: 18.12.2017
(51) Int. Cl.: E04F 15/02, E04F 15/10, B32B 27/32, B32B 3/04

(54) **A NATURAL FIBER COMPOSITE BOARD**

(71) Applicant: UPM-Kymmene Corporation, 00100 Helsinki (FI)
(72) Inventor: Ernst, Gerhard, 76703 Kraichtal (DE)
(74) Representative: Berggren Oy, Tampere

(57) **Abstract**

An elongated board comprising a natural fiber plastic composite body (10), the body having a first side (12) and a second side (14), the first side being completely coated with a polymeric coating layer (20) comprising at least one thermoplastic polymer, such as polyolefin, and the second side comprising at least two partial polymeric coating layers in the form of strips (22, 23, 24) along the lengthwise direction of the body. A method for forming such an elongated board by coextrusion.

## Description

### Field of the application

The present application relates to boards comprising a natural fiber plastic composite body, such as a decking board. More particularly the present application relates to boards completely coated on one side only with a polymeric coating layer.

### Background

Natural fiber plastic composite products typically comprise wood material, such as saw dust, and at least one kind of plastic polymer. The composite products may be provided as boards or planks which may be used for several purposes, for example for furniture, deck floors, fences, window frames, and door frames.

The composite products may be coated with a layer providing desired appearance to the composite product. In such case the product comprises a core or a body as a first layer and a coating, such as a polymer coating, as a second layer. The core may contain material which is not desired to be visible because of its appearance, for example if recycled materials are used. The coating layer may also protect the core layer from moisture, mechanical wear, sunlight and the like. The coating layer may also provide support and stiffness to the product, which is required as the composite material itself may not be stiff enough, which is a problem especially when elongated products are formed. When the length of the board increases, the tendency to bend or break also increases so there is a high risk of damaging the elongated boards, for example during storage, transport and/or installation.

However, the coating layer is usually contains expensive materials, such as virgin high-quality and high-performing polymers containing additives, such as pigments, UV protective agents, and the like. Therefore the coating raises the production costs of the composite products.

### Summary

It was found out how the productions costs of a composite board could be lowered without compromising the appearance and mechanical properties of the product. It is possible to coat only the visible side of the board completely with the polymeric coating to save in costs. However, the different properties, such as different shrinkage properties, of the core and the coating layer may cause deformation of such partially coated board. When supporting partial coating was applied to the opposite side of the board, it was possible to balance the structure of the board and to obtain a board having desired mechanical properties.

The present application provides an elongated board comprising a natural fiber plastic composite body 10, the body having a first side 12 and a second side 14, the first side being completely coated with a polymeric coating layer 20 comprising at least one thermoplastic polymer, and the second side comprising at least two partial polymeric coating layers 22, 23, 24 in the form of strips along the lengthwise direction of the body.

The present application also provides a decking board comprising the elongated board comprising a natural fiber plastic composite body.

The present application also provides a method for forming an elongated board comprising a natural fiber plastic composite body, the method comprising
- providing a natural fiber plastic composite material,
- providing polymeric material,
- providing a coextrusion system,
- applying the natural fiber plastic composite material and the polymeric material to the coextrusion system, and
- coextruding the natural fiber plastic composite material and the polymeric material into an elongated board comprising a natural fiber plastic composite body, the body having a first side and a second side, the first side being completely coated with a polymeric coating layer, and the second side comprising at least two partial polymeric coating layers in the form of strips along the lengthwise direction of the body

The main embodiments are characterized in the independent claims. Various embodiments are disclosed in the dependent claims. The embodiments recited in claims and in the description are mutually freely combinable unless otherwise explicitly stated.

It was found out that it is not necessary to coat the natural fiber plastic composite body thoroughly to obtain a desired stiffness to the board, but only one side needs to be coated completely. When supporting strips, especially two or more strips, of plastic coating were applied onto the second side of the board, i.e. to the opposite side to the completely coated side, which second side is not visible during the use, it was possible to enhance the rigidity of the board and prevent bending or breaking of the board. As the polymeric coating layer is more shrinkable than the composite body, it causes bending force affecting to the board, which bends the board if the coating is applied only on one side of the board. When partial coating is applied to the bottom of the board, it balances the structure and enhances the mechanical properties of the board, such as stiffness, hardness and tensile or flexural properties, such as tensile strength, flexural modulus and/or bending/flexural strength, and therefore prevents deformation of the board, for example deflections in the longitudinal and crosswise direction. This decreases the need of the expensive high quality polymeric coating, and therefore also the production costs are lowered.

The present solution is especially suitable for products containing recycled materials, such as materials containing impurities which may weaken the mechanical strength of the composite body. The composite body may have completely different behavior and appearance when compared to the coating layer made of substantially pure polymer(s). For example a composite body containing recycled materials may have different shrinkage properties than the polymeric coating which does not contain similar materials, i.e. the composite body is much less shrinkable than the polymeric coating. Composites containing inorganic fillers have even lower tendency to shrink. One example of such recycled material is recycled labels, which may contain fibers, polymers, printing inks, adhesives, release agents, such as silicones, inorganic fillers and the like. Another example of recycled material is recycled plastics, such as plastics comprising polyethylene and/or polypropylene. Also the recycled plastics may contain impurities, such as printing inks, and other impurities, for example remains of the contents of recycled plastic containers, bags, wrapping and the like. Still another example of recycled material is recycled wood-based particles, such as sawdust, plywood or particle board grinding material dust and the like, which may contain lignin but also adhesives, waxes, coatings, paints and the like. Still another example of recycled material is deinking sludge. Further, the content of the available recycled material usually varies at different time points and the differing proportions of polymers, fillers and impurities have an effect to the properties of the composite material. Therefore it is important to ensure the uniform quality of the final products manufactured from varying raw materials with the solutions according to the embodiments.

The recycled materials may not only weaken the mechanical strength of the formed composite materials, but it may be also challenging to attach a polymeric coating to such material. When using compatible polymers in both core and coating, it is possible to enhance the adhesion of the materials in the formed laminates. Further, using coextrusion methods for forming the final product will also enhance the adhesion.

Coextrusion as the manufacturing method also enables forming products with desired structure. It is possible to form all the shapes of the final product, such as grooves, protrusions, coating stripes and the like, in one process. Further the process is fast and the final product is obtained immediately. No post-processing of the product is required.

### Brief description of the figures

Figure 1 shows a cross section of a schematic board of an embodiment
Figure 2 shows a photo of cross section of a coextruded decking board
Figure 3 shows a photo of decking boards without the second side comprising at least two partial polymeric coating layers in the form of strips
Figure 4 shows a cross section of a schematic board of an embodiment containing apertures inside the body along the lengthwise direction of the body
Figure 5 shows a cross section of a schematic installation of two boards on a support by using a fastener clip

### Detailed description

All the percentage values disclosed herein refer to percentages by weight (w/w) of dry weights unless otherwise mentioned. The sum of the ingredients, such as polymers, fillers and additives, in the embodiments and examples disclosed herein adds up to 100% (w/w).

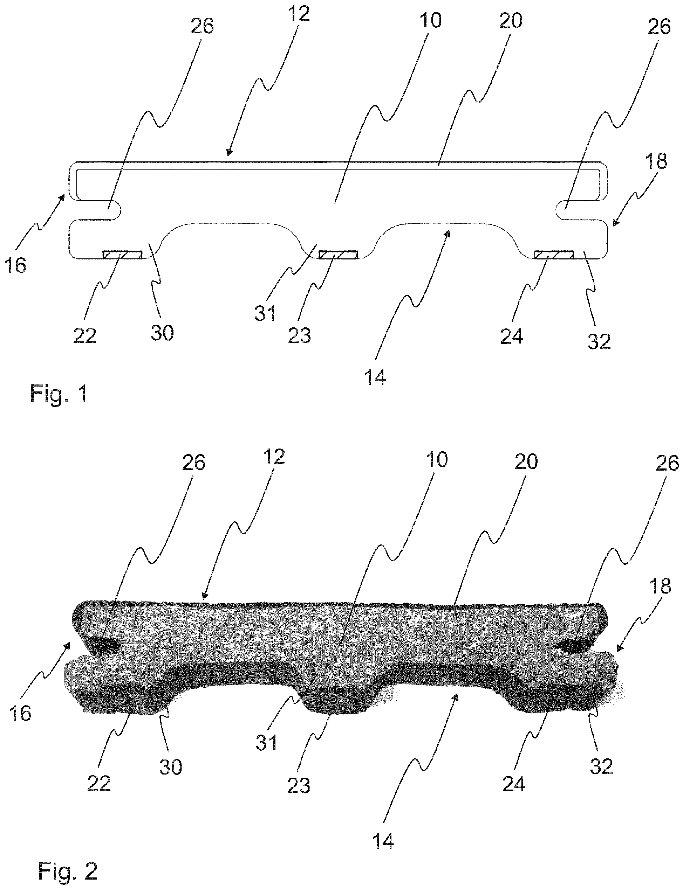

The present embodiments provide elongated boards comprising a natural fiber plastic composite body 10, as shown in the schematic cross section of Figure 1. The board may be obtained with the methods described herein. The body has a first side 12 and a second side 14, which is opposite to the first side. These sides are the largest sides of the board, i.e. the sides with largest surface areas. The first side is the side which is visible when the final product is installed, for example the upper side or the outer side. The second side is the side which is not visible when the final product is installed, for example the bottom side or the inner side. The board has also a third side 16 and a fourth side 18, which have smaller surface areas, and they are practically perpendicular to the first side and to the second side. The third side and/or the fourth side(s) may contain further shapes, for example one or more installation groove(s) 26 and/or one or more protrusion(s), for example arranged to fit to one or more installation groove(s). The board also has a fifth side and a sixth side, which are the end sides of the elongated board.

The board is elongated, which means that it has one dimension, a length, which is greater than any other dimension. The board has also a width and at least one height, wherein the width is greater than the at least one height. The length of the board is greater than the width, such as at least two times the width, for example at least three, four, five, six, ten or more times the width. The first and the second sides may be defined by the length and the width. The third and the fourth sides may be defined by the length and the height. The fifth and the sixth sides may be defined by the width and the height(s). The length of the board may be at least 500 mm, at least 1000 mm, such as at least 2000 mm, at least 3000 mm or at least 4000 mm, for example in the range of 1000-10000 mm, 1000-6000 mm, or 1000-5000 m. The width of the board may be in the range of 50-500 mm, such as in the range of 50-300 mm, in the range of 100-500 mm, or in the range of 100-300 mm. The height of the board may be in the range of 5-50 mm, such as in the range of 5-40 mm, in the range of 5-30 mm, in the range of 10-50 mm, in the range of 10-40 mm, or in the range of 10-30 mm. The board may have more than one height, for example when there are one or more protrusions on the second side of the board. There may be two or three heights, for example, the first height being the lowest, and the second and/or third height being higher than the first height, for example 3-20 mm higher, such as 5-10 mm higher. Figure 1 shows a cross-section of an example of the board having a width and two different heights. The dimensions and ranges disclosed herein are mutually combinable. In one embodiment the board has a width in the range of 50-300 mm, height in the range of 5-50 mm and/or a length of at least 1000 mm, such as in the range of 1000-10000 mm.

Natural fiber plastic composite comprises one or more plastic polymer(s), such as thermoplastic polymer(s), and one or more filler(s), including natural fibers, which are organic fibers. The natural fibers may be plant fibers, such as wood fibers or non-wood fibers, for example cellulosic fibers. The wood material may be from softwood trees, such as spruce, pine, fir, larch, douglas-fir or hemlock, or from hardwood trees, such as birch, aspen, poplar, alder, eucalyptus, or acacia, or from a mixture of softwoods and hardwoods. Non-wood material may be agricultural residues, grasses or other plant substances such as straw, leaves, bark, seeds, hulls, flowers, vegetables or fruits from cotton, corn, wheat, oat, rye, barley, rice, flax, hemp, manila hemp, sisal hemp, jute, ramie, kenaf, bagasse, bamboo, or reed. The cellulose may be virgin or recycled. The cellulosic fibers may originate for example from wood dust, saw dust or other wood source, or they may originate from pulp, such as mechanical, chemical or chemithermomechanical pulp. The cellulosic fibers may originate from recycled materials, such as recycled papers, cardboards, labels, release liners, and the like. In one example the natural fiber plastic composite does not contain inorganic fibers.

In one embodiment the natural fiber plastic composite material comprises at least one thermoplastic polymer and wood fibers, such as cellulosic fibers.

It may be desired to have low lignin content in the natural fiber plastic composite. In such case fibrous filler material with low lignin content may be used. For example pulp which is delignified may be used, such as chemical pulp, for example kraft pulp. The lignin content of the filler may be less than 3% (w/w), less than 2% (w/w), less than 1% (w/w), or less than 0.5% (w/w) calculated from the total filler. In one embodiment the natural fiber composite material comprises fiber comprising less than 1% (w/w) of lignin calculated from the total fibers, such as fiber from kraft process, or the fiber of the natural fiber composite material contains less than 1% (w/w) of lignin. Recycled materials having low lignin content, such as fine paper, may be used. As the lignin causes darkening of the pulp, the low lignin content of the fibers and the filler provides a lighter color for the composite. This enables using thinner coating layer, as there is less need to mask the dark and/or uneven color of the composite body. However, if material containing high percentage of lignins, such as wood dust or saw dust, plywood or particle board dust, recycled newspapers or the like, or other colored material, is used in the composite body, it may be necessary in include one or more pigment(s) to the composite materials and/or to the polymeric coating to mask the undesired color, and/or to use relatively thicker layer of polymeric coating.

In one embodiment the amount of the plastic polymers is in the range of 10-80% (w/w) of the dry weight of the total composite. In one embodiment the amount of the plastic polymers is in the range of 20-80% (w/w) of the dry weight of the total composite. In one embodiment the amount of the plastic polymers is in the range of 20-70% (w/w) of the dry weight of the total composite. In one embodiment the amount of the plastic polymers is in the range of 30-70% (w/w) of the dry weight of the total composite. In one embodiment the amount of the plastic polymers is in the range of 40-70% (w/w) of the dry weight of the total composite. In one embodiment the amount of the plastic polymers is in the range of 10-60% (w/w) of the dry weight of the total composite. In one embodiment the amount of the plastic polymers is in the range of 10-50% (w/w) of the dry weight of the total composite. In one embodiment the amount of the plastic polymers is in the range of 10-40% (w/w) of the dry weight of the total composite. In one embodiment the amount of the plastic polymers is in the range of 10-30% of the dry weight of the total composite. Examples of the amount of the plastic polymers in the dry weight of the total composite include about 10%, 20%, 30%, 40%, 50%, 60%, 70% and 80% (w/w).

In one embodiment the composite contains plastic polymers in an amount in the range of 10-70% and filler in the range of 30-90% (w/w) of the dry weight of the total composite. In one embodiment the composite contains plastic polymer in an amount in the range of 20-70% and filler in the range of 30-80% (w/w) of the dry weight of the total composite. In one embodiment the composite contains plastic polymer in an amount in the range of 30-70% and filler in the range of 30-70% (w/w) of the dry weight of the total composite. The composite may further contain additives as disclosed herein.

The plastic polymer may be thermoplastic polymer. A thermoplastic is a plastic which becomes pliable or moldable above a specific temperature and returns to a solid state upon cooling. Examples of thermoplastic polymers include poly(methyl methacrylate), polyamide (Nylon), polyethylene, polypropylene, polystyrene, polyvinyl chloride, polytetrafluoroethylene (Teflon), polyethylene terephthalate and mixtures thereof. The plastic polymer may be cross-linked.

Thermoplastic polymer may be a thermoplastic polyolefin, or a mixture thereof, or a mixture of polyolefin and another thermoplastic polymer, or a polymer derived from one or more thermoplastic polymer(s), such as a copolymer. Examples of thermoplastic polyolefins include polyethylene, polypropylene, polymethylpentene, and polybutene-1. In one embodiment the thermoplastic polymer comprises or consists of polyolefin, such as polypropylene (PP) or polyethylene (PE). In one embodiment the thermoplastic polymer comprises polyolefin, such as polyethylene or polypropylene. In one embodiment the thermoplastic polymer is polyolefin.

In one example the thermoplastic polymer has a melting point above 200°C. In such case the thermoplastic polymer may be selected for example from polyamide, polyethylene terephthalate (PET) and polycarbonate. Also certain polyethylenes may have such as high melting point.

In one embodiment the thermoplastic polymer is polypropylene. Polypropylene is a thermoplastic polymer having a glass transition temperature of about -20°C (atactic polypropylene) or about 0°C (isotactic polypropylene). Examples of suitable polypropylenes or polymers derived from polypropylene include PP-homopolymers, random PP copolymers, PP block copolymers, PP terpolymers, PP elastomers and PP plastomers.

In one embodiment the thermoplastic polymer is polyethylene. Polyethylene is a thermoplastic polymer which may be classified into several different categories based on density and branching. Examples of such categories include ultra-high-molecular-weight polyethylene (UHMWPE), ultra-low-molecular-weight polyethylene (ULMWPE or PE-WAX), high-molecular-weight polyethylene (HMWPE), high-density polyethylene (HDPE), high-density cross-linked polyethylene (HDXLPE), cross-linked polyethylene (PEX or XLPE), medium-density polyethylene (MDPE), linear low-density polyethylene (LLDPE), low-density polyethylene (LDPE), very-low-density polyethylene (VLDPE) and chlorinated polyethylene (CPE). The melting point and glass transition temperature may vary depending on the type of polyethylene. For medium and high-density polyethylene the melting point is typically in the range of 120-180°C, and for average low-density polyethylene in the range of 105-115°C. The glass transition temperature of LDPE is about -125°C.

In one embodiment the thermoplastic polymer is polyvinyl chloride. Polyvinyl chloride (PVC) is a polymer produced by polymerization of the monomer vinyl chloride. PVC may have a melting point in the range of 100-260°C.

In one embodiment the thermoplastic polymer(s) comprise one or more polyolefin(s). In one embodiment the amount of the polyolefin is at least 60% (w/w) or at least 70% (w/w), more preferably at least 75% (w/w) or at least 80% (w/w), and most preferably at least 85% (w/w) or at least 90% (w/w) of the total thermoplastic polymers used in the composite.

The composite may comprise thermoplastic polymers that are virgin and/or recycled. In some examples at least 50% (w/w), at least 60% (w/w), at least 70% (w/w), at least 80% (w/w) or at least 90% (w/w) of the thermoplastic polymers in the composite are recycled. The rest of the thermoplastic polymers may be virgin polymers. It is also possible to use only recycled thermoplastic polymers. In one example the composite comprises at least one kind of recycled thermoplastic polymer, for example the composite comprises at least two kinds of recycled thermoplastic polymers. In an example, the recycled thermoplastic polymer comprises polyethylene (PE) and/or polypropylene (PP) and/or polyvinyl chloride (PVC) and/or polyethylene terephthalate (PET).

The composite may further comprise one or more inorganic filler(s), such as mineral filler(s). The inorganic filler may comprise kaolin clay, ground calcium carbonate, precipitated calcium carbonate, titanium dioxide, wollastonite, talcum, mica, silica, or a mixture thereof. The content of the inorganic filler may be in the range of 0-50% (w/w), such as 5-50% (w/w), or 10-40% (w/w), or 5-15% (w/w) for example about 10% (w/w). The composite may further comprise additives, such as one or more additive(s) selected from coupling agents, foaming agents (blowing agents), binders, cross-linking agents, pigments, dyes, UV protective agents, lubricants and/or other additives customary in the art of natural fiber plastic composites. The content of the additives in the composite product may be in the range of 1-5% (w/w), such as in the range of 1-3% (w/w). In one embodiment the composite contains a coupling agent. The content of the coupling agent in the composite product may be in the range of 1-3% (w/w). The coupling agent may comprise, for example, maleic anhydride functionalized HDPE, maleic anhydride functionalize LDPE, maleic anhydride-modified polyethylene (MAHPE), maleic anhydride functionalized EP copolymers, acrylic acid functionalized PP, HDPE, LDPE, LLDPE, and EP copolymers, styrene/maleic anhydride copolymers, vinyl trialkoxy silanes, or combinations thereof.

The natural fiber composite material may contain plastic polymers in the range of 20-70% (w/w), natural fibers in the range of 10-75% (w/w), and inorganic filler in the range of 10-50% (w/w). In one example the natural fiber composite material may contain plastic polymers in the range of 20-45% (w/w), natural fibers in the range of 10-50% (w/w), and inorganic filler in the range of 10-30% (w/w). The composite may further contain additives in the range of 1-5% (w/w) as discussed herein. The sum of the ingredients adds up to 100% (w/w). The percentages refer to dry weight.

The composite body may comprise more than one composite material, such as mixed or as layers, or it may consist of one composite material. The composite body may contain foamed and/or non-foamed composite material(s). In one example the composite body is non-foamed. In one example the composite body contains a foamed composite core completely or partially coated with a non-foamed composite layer.

The natural fiber composite material may comprise recycled material selected from for example recycled adhesive laminate waste, release material, recycled plastics, recycled wood-based particles, and/or deinking sludge. In one embodiment the natural fiber composite material comprises recycled adhesive laminate waste and/or release material, for example release liners. The recycled material may act as filler, and it may provide polymer(s), natural fibers and optionally also inorganic filler(s) to the composite material. In such case no other filler material is necessarily needed. However, it is possible to include also other polymer(s) and/or fiber(s) and/or other filler(s). In one example the natural fiber plastic composite consists of recycled adhesive laminate waste and/or release material, and optionally additives as discussed herein.

In one example the composite material comprises recycled adhesive laminate waste arranged into chaff and the chaff being arranged into the composite material, wherein the adhesive laminate waste comprises adhesive material, glue and release material, wherein the release material comprises a silicone-based agent, and the adhesive laminate waste is obtained from adhesive laminate production, adhesive laminate press facilities and/or adhesive laminate end users.

Recycled material may comprise for example coated and/or uncoated papers, comprising cellulose based particles and possible inks or pigments, the total amount of the papers being, for example, at least 20%, and/or water-based acrylic polymer adhesives, hotmelt adhesives, and/or rubber adhesives, the total amount of the adhesives being, for example, 20% at the most, and/or silicone release agents, the total amount being, for example, 5% at the most, and/or plastic film(s), for example, polyethylene (PE), polypropylene (PP), polystyrene (PS) and/or polyethylene terephthalate (PET), the total amount of the plastic films being, for example, 80% at the most, and/or talcum, the total amount being, for example, 20% at the most.

In one example the adhesive material and/or the release material comprises a wood-based component and/or plastic-based or polymer-based or other organic component. In one example the adhesive and/or the release material comprises wood fibre based paper, paperboard or the like. In one example the adhesive and/or the release material comprises fine paper, i.e. a wood-free paper, and does therefore contain only trace amounts of lignin. In one example the wood fibre based paper, paperboard or the like comprises or is treated with plastic-based or a polymer-based material. In one example, the adhesive and/or the release material is formed of substantially plastic-based or polymer-based material. In one example the release material comprises a silicone-based component. The release material, such as release liner, may be siliconized.

In one example the adhesive laminate waste is chopped and screened into chaff material of the desired particle size before making the composite material. In one example the particle size of the chaff to be led into production is in the range of 1-10 mm, such as 3-5 mm. Any other recycled material may be formed into chaff material in similar way.

If necessary, the recycled materials used in the composites are dried before transportation and/or usage. The water or moisture content of the dried material may be in the range of 0.1-10% (w/w), such as 0.1-1 % (w/w).

In one example the composite material comprises deinking sludge, which may also be called as paper sludge. Deinking sludge is recycled material which is formed as a side stream in deinking process and it typically contains mineral fillers, fibers and inks. So far the side stream has been used as a landfill or burnt. The deinking procedures have been developing in last years and nowadays it is possible to recover most of the cellulose from the deinked material. The modern types of deinking sludges contain relatively small amount of remaining cellulose compared to sludges obtained by using older technology. A typical content of a dried sludge includes about 20% (w/w) of cellulose fibers and about 70% of minerals, mainly calcium carbonate. The amount of the ink is small but however significant as it affects the appearance of the final product and makes the use of the sludge in composite products very challenging.

The deinking sludge may contain organic material in the range of 25-45% (w/w) and minerals in the range of 55-75% (w/w), usually mostly calcium carbonate (generally in the range of 50-60% (w/w) of the total content). Other minerals include kaolin and talcum. The organic material contains organic fibers, which are mainly cellulose fibers, adhesives, latex, starch and other extractive wood components such as resins, fat and resin acids. In one example the sludge contains cellulose fibers in the range of 10-30% (w/w), such as in the range of 15-25% (w/w), for example in the range of 17-23% (w/w). In some examples sludge contains about 17-19% of cellulose fibers. In one example the sludge contains minerals in the range of 55-75% (w/w), such as in the range of 65-75% (w/w), for example in the range of 67-73% (w/w). In one example the sludge contains cellulose fibers in the range of 10-30% (w/w) and minerals in the range of 55-75% (w/w). In one example the sludge contains cellulose fibers in the range of 15-25% (w/w) and minerals in the range of 65-75% (w/w). The amount of stickies (adhesives, latex, starch etc.) may be for example in the range of about 11-13%, and the amount of extractives about 0.5%. In other terms the content may be defined as organics (for example about 30%) and inorganics (for example about 70%). The total content 100% of the sludge also includes the very small amount of inks and other materials, such as the other organic materials.

The ink content may be in for example the range of 0.01-1% (w/w) of the total dry content of the sludge. The organic fibers are mostly cellulose fibers, so the cellulose content of the fibers may be in the range of 80-100%, such as 90-100%, for example 95-100%. In one example the organic fibers consist substantially of cellulose fibers, such as about 99% or about 100% cellulose fibers, or 99-100%.

In general the composite may contain the dried deinking sludge in amounts in the range of 5-90% (w/w). In one embodiment the composite contains dried deinking sludge in an amount in the range of 30-80% (w/w). In one embodiment the composite contains dried deinking sludge in an amount in the range of 55-65% (w/w). In one embodiment the composite contains thermoplastic polymer in an amount in the range of 20-70% and dried deinking sludge in the range of in the range of 30-80% (w/w). In one embodiment the composite contains thermoplastic polymer in an amount in the range of 30-45% and dried deinking sludge in the range of in the range of 55-70% (w/w). Any additives as discussed herein may be also included.

In one example a method for manufacturing natural fiber plastic composite product comprises providing one or more thermoplastic polymer(s) and one or more filler(s), and optionally one or more additive(s), mixing the materials, heating the mixture above the melting point of the one or more thermoplastic polymer(s), and forming the mixture into a composite product. One or more of these steps may be carried out by using a coextruder or a coextrusion system. The one or more thermoplastic polymer(s) and one or more filler(s), and optionally one or more additive(s), may be provided as a mixture, for example as a mixture of chaff, granules, or other pieces of the materials, such as recycled materials.

Extrusion is a process used to create objects of a fixed cross-sectional profile. A material is pushed or drawn through a die of a desired cross-section. The two main advantages of this process over other manufacturing processes are its ability to create very complex cross-sections, and to work materials that are brittle, because the material only encounters compressive and shear stresses. It also forms parts with an excellent surface finish. In an extrusion process the thermoplastic polymer and the filler and/or reinforcement material are provided, mixed if necessary, and fed to an extruder, wherein the materials are heated to a desired temperature and pushed through a die to obtain an extrudate. Extrusion may be continuous (theoretically producing indefinitely long material) or semi-continuous (producing many pieces). One example of the extrusion process is extrusion molding.

Co-extrusion is a process of extruding two or more materials simultaneously through a single die with two or more orifices arranged so that the extrudates merge and weld together into a laminar structure before chilling. Each material is fed to the die from a separate extruder, but the orifices may be arranged so that each extruder supplies two or more plies of the same material. The advantage of coextrusion is that each ply of the formed laminate imparts a desired characteristic property, such as stiffness, heat-sealability, impermeability or resistance to some environment, all of which properties would be impossible to attain with any single material. In one embodiment the board is manufactured with a coextrusion process.

The present disclosure provides a coextrusion system comprising at least two extruders and a die designed to form the elongated board disclosed herein, such as comprising a natural fiber plastic composite body, the body having a first side and a second side, the first side being completely coated with a polymeric coating layer, and the second side comprising at least two partial polymeric coating layers in the form of strips along the lengthwise direction of the body. The coextrusion system may be used in the methods for manufacturing the elongated boards. The present disclosure also provides the coextrusion die designed to form the elongated board disclosed herein. The coextrusion system may have two separate containers, one for the natural fiber plastic composite material and one for the polymeric material, and separate extruders each connected to one of the two separate containers.

The present application provides a method for forming an elongated board comprising a natural fiber plastic composite body, the method comprising
- providing a natural fiber plastic composite material,
- providing polymeric material,
- providing a coextrusion system,
- applying the natural fiber plastic composite material and the polymeric material to the coextrusion system, optionally forming a mixture of one or more thermoplastic polymer(s) and one or more filler(s), such as natural fibers and plastic and optionally other fillers, and/or additives, for the composite material, and optionally forming a mixture of polymeric material and additives for the coating, for example before applying to the coextrusion system or in the coextrusion system, and
- coextruding the natural fiber plastic composite material and the polymeric material into an elongated board disclosed herein comprising a natural fiber plastic composite body, the body having a first side and a second side, the first side being completely coated with a polymeric coating layer, and the second side comprising at least two partial polymeric coating layers in the form of strips along the lengthwise direction of the body. The composite mixture for the body and the polymeric material for the coating are heated in the coextrusion system to a melting point or above of the thermoplastic polymer(s) in the composite mixture for the body and in the polymeric material for the coating to melt the polymer(s).

The melting temperature or melting point of the thermoplastic polymer may be for example about 120°C, about 130°C, about 150°C, about, 155°C, about 160°C, about 170°C, about 180°C, about 190°C, about 200°C, about 220°C about 300°C or even about 327°C. One example of a very high melting point is that of polyamide (Nylon), about 190-350°C, or polytetrafluoroethylene (Teflon), about 327°C. "Above the melting point of the thermoplastic polymer" refers to a temperature wherein the thermoplastic polymer melts at least partially and can be processed, for example extruded, and it may include the melting point.

The temperature used for melting the thermoplastic polymer may be for example in the range of 120-380°C, such as 150-360°C, such as 180-360°C. Generally temperatures up to 380°C may be used, but in general the temperature may be up to 360°C, up to 350°C, up to 340°C, up to 330°C or up to 300°C. In one example the temperature is in the range of 200-360°C. In one example the temperature is in the range of 200-340°C. In one example the temperature is in the range of 200-300°C. In one example the temperature is in the range of 220-360°C. In one example the temperature is in the range of 220-340°C. In one embodiment the temperature is in the range of 220-300°C. In one example the temperature is in the range of 240-360°C. In one example the temperature is in the range of 250-360°C. When using high temperatures, such as over 200°C or over 210°C or over 220°C or over 230°C or over 240°C, polymers such as polystyrene, polyamide, polytetrafluoroethylene, polyethylene terephthalate (PET), poly(methyl methacrylate) and polycarbonate (PC) may be used. These materials have a high melting point and therefore the obtained products will also tolerate high temperatures. At lower temperatures, such as below 180°C or below 160°C, also polyolefins may be used. With polyolefins a temperature for example in the range of 120-190°C or 120-180°C may be used. In one example the temperature is in the range of 150-200°C. In one example the temperature is in the range of 180-200°C. In one example the temperature is in the range of 180-220°C.

In one example the thermoplastic polymer has a melting point of at least 200°C, such as at least 220°C, or at least 230°C, or at least 240°C or at least 250°C or at least 260°C. In one example the thermoplastic polymer comprises a thermoplastic polymer selected from polystyrene polyamide, polytetrafluoroethylene, polyethylene terephthalate (PET) and polycarbonate.

The inks, adhesives, silicones, lignins and other impurities in the recycled material or other filler may affect the appearance and the mechanical properties of the final composite product. Also the color of the product may fade especially in outdoor use or storage. There may also be variations in the color and the composition of the filler which may affect to the appearance of the product. Further, the composite comprising recycled material may not tolerate weather as well as pure plastic in respect of the mechanical properties. Therefore it is necessary to apply a covering layer on the colored composite containing recycled material, such as a non-transparent covering layer. The covering layer is preferably also weather resistant. The covering layer may be called a first layer or an outer layer, and the other layer containing the composite material may be called a second layer, a body, an inner layer, or an inner composite.

The first side of the board is completely coated with a polymeric coating layer. The first side may be the only side of the board completely coated with the polymeric coating layer. As the first side is completely coated, no composite body is directly visible or accessible at the first side of the board. The applied coating usually defines the appearance of the board as the first side is the side which is usually visible when the board is installed in the target. The coating may be colored, for example with one or more pigment(s), and it may contain for example patterns or figuration, such as patterns mimicking the appearance of wood. The coating may enhance the mechanical properties of the board, but it may also provide other properties, such as properties relating to friction. For example the coating may provide higher wet friction compared to the composite body, which is important especially when the boards are used as outdoor floor materials. The coating layer may have a thickness in the range of 0.5-5 mm, such as 0.5-3 mm, or 0.5-2 mm, for example 0.6-1.2 mm. The thickness of the coating layer may depend on the desired mechanical properties, but also the need to mask the composite layer may also have an effect to the required thickness of the coating layer. For example if the color of the composite layer differs significantly from the color of the coating layer, it may be necessary to apply a thicker coating layer to prevent the color of the composite being visible through the coating layer, for example 1-3 mm. On the other hand, in some cases a thinner coating layer may be desired, such as one having a thickness of 0.6-1.0 mm, for example about 0.8 mm.

The coating layer may comprise one or more polymer(s), such as plastic polymers. The polymers may be thermoplastic polymer(s). As the coating layer is visible during the use and is exposed to mechanical wear and probably also to sunlight and weather, it is preferable that the coating layer is made of high quality material. The coating layer may comprise only plastic polymer(s), meaning that no or substantially no fillers are included, such as fibers or mineral fillers. The plastic polymer(s) may be virgin polymer(s). The coating layer may contain minor amount of additives, such as 0.5-5% (w/w), or 0.5-2% (w/w), or about 1%, of one or more pigment(s), one or more binder(s), one or more UV protecting agent(s), one or more cross-linking agent(s) and/or the like. The coating layer may comprise at least 95% (w/w) of polymer(s), such as at least 98% (w/w), at least 99% (w/w) or at least 99.5% (w/w) of polymer(s). Preferably the coating layer is not a composite layer, such as a fiber-plastic composite layer. However, in some examples it is possible to include filler to the coating layer, such as any filler disclosed herein, for example in the range of 1-30% (w/w), 1-20% (w/w) or 1-10% (w/w). In such case the filler content in the coating layer is lower than in the body, such as 50% or less, or 30% or less, or 10% or less of the filler content of the body. The coating layers of the embodiments are suitable for versatile use, for example outdoor use. The coating layer is hard and durable and therefore it provides for example scratch resistance.

The polymers, such as thermoplastic polymers, in the composite material and in the coating layer may be same or different. However, when same polymer(s) is/are used, the body and the coating layer are more compatible with each other and will be strongly attached to each other. This enhances the mechanical properties of the board. In one embodiment the natural fiber plastic composite and the polymeric coating layers comprise the same at least one polymer(s). Examples of polymers which may be used in both the coating layers and in the body include polyolefines and PVC. In one embodiment the polymeric coating layers comprises at least one thermoplastic polymer, such as one or more polyolefin(s).

At the second side the board comprises at least one, preferably at least two, partial polymeric coating layer(s) in the form of strip(s) along the lengthwise direction of the body. A strip is a long narrow piece of material. The "partial polymeric coating layer" as used herein refers to a coating which is not complete on the second side but the second side is coated only partially. In other words, the second side of the board or the body is not completely coated with a polymeric coating layer. The partial polymeric coating layer(s) are preferably continuous along the lengthwise direction of the body, such as continuous strip(s) along the whole length of the elongated board. However in one example the partial polymeric coating layer(s) is/are not continuous along the whole length of the elongated board. The parallel partial polymeric coating layers may have discontinuity parts, for example one or more gap(s) in a strip, which are however not overlapping with each other in the direction of the width. This is to ensure that there is always at least one coating strip along every part of the board in the lengthwise direction. The at least two partial polymeric coating layers may be of the same material or different material as the coating layer of the first side of the body. In one embodiment all the polymeric coating layers are of the same material. In one embodiment the polymeric coating layers on the first side and on the second side are of different material, for example having a completely or partially different polymer composition. If the polymeric coatings on the first side and on the second side are different, the coextrusion system should have at least three extruders.

In one example at the second side the board comprises only one partial polymeric coating layer in the form of a strip along the lengthwise direction of the body. However, only one partial polymeric coating layer was not found as effective as at least two partial polymeric coating layers. For example with only one strip the board has a tendency to bend crosswise. Also a larger width of the only one strip is required, for example 10-100 mm, such as 20-80 mm.

In one embodiment the at least two partial polymeric coating layers in the form of strips have a width in the range of 5-20 mm, such as in the range of 5-15 mm, or in the range of 8-12 mm or 10-15 mm. The width of a strip may be the same i.e. constant along the length of the elongated board, or it may vary. To obtain optimally balanced mechanical properties of the board, the coating on the first side and on the second side should have equal or nearly equal volume. However, this is not always possible and may not result in cost savings, but in some examples it may be advantageous to arrange the partial coatings on the second side in such way that the total volume of the coatings is at least 25% of the volume of the continuous coating on the first side, at least 30%, at least 40%, at least 50%, at least 60%, at least 70%, or at least 80% of the volume of the continuous coating on the first side. However, in general having two or more continuous strips of coatings on the second side, as disclosed herein, and even with a smaller volume than the coating on the first side, provides more efficient supporting effect compared to an example wherein the same volume of coating was applied as a full coating and/or as one continuous coating on the second side.

The partial polymeric coating layer(s) at the second side of the body may have a thickness in the range of 0.5-5 mm, such as 0.5-3 mm, or 1-3 mm, for example 1-2 mm. The partial polymeric coating layer(s) at the second side of the body may be the outermost parts of the board on the second side. In such case when the board is installed on a support or a background, such as on an existing floor, wall or other base, only the polymeric coating strips are in contact with the support or the background. This isolates the composite body from the support or the background, which reduces for example the risk of moisture rising or penetrating to the composite body.

In one embodiment the polymeric coating layers have a thickness in the range of 0.5-5 mm, such as 0.5-3 mm, in all the coating layers. There may be however small variations in the thicknesses of the coating layers at different locations, as can be seen from Figure 2.

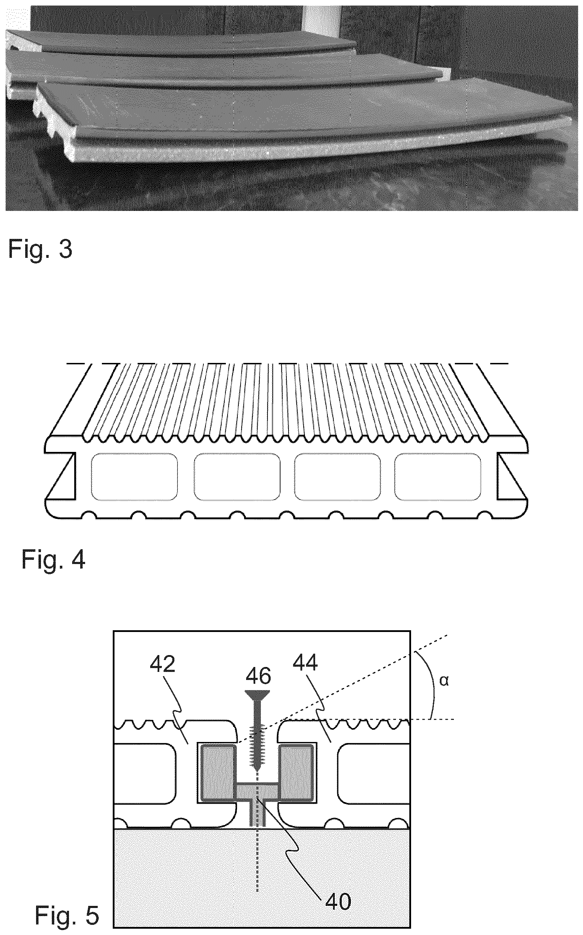

In one embodiment the second side of the body comprises at least two elongated protrusions 30, 31, 32 along the lengthwise direction of the body. The protrusions are preferably continuous along the lengthwise direction of the body. Such protrusions, which may also be called as projections, may be included in elongated boards to provide stiffness. It is also possible to save in material costs and to obtain a lighter product, but maintain larger overall outer dimensions of the product, such as height. A board may contain for example two, three, four or more elongated protrusions. It is also possible to include one or more apertures inside the body, for example four apertures as illustrated in Figure 4. In one example the body contains at least one elongated aperture inside the body along the lengthwise direction of the body, such as two, three, four or more apertures.

In one embodiment the at least two partial polymeric coating layers 22, 23, 24 are on at least two elongated protrusions 30, 31, 32 along the lengthwise direction of the body 10, for example in a groove on the elongated protrusions. This enhances the effects of the protrusions and the coating strips, and results in a surprisingly rigid board which is not prone to bend or break during handling.

To distribute the supporting effect evenly to the whole area of the board the polymeric strips should be arranged symmetrically on the second side, more particularly symmetrically along the width of the second side. With a symmetrical arrangement of two or more strips the supporting effect is not only directed to lengthwise direction of the elongated board but also crosswise bending or deformation is evenly suppressed or prevented. In one embodiment the at least two partial polymeric coating layers in the form of strips along the lengthwise direction of the body are arranged symmetrically on the second side of the body. The strips may be at the same distances from each other, and/or the outermost strips may be at the same distance from the each edge of the width of the board on the second side or from the middle of the width of the board on the second side i.e. from the middle line on the second side along the lengthwise direction of the body. If there are an odd number of strips 22, 23, 24 the middle strip 23 is at the middle of the second side 14. An example of symmetrically arranged strips is shown in Figure 1.

The effect of the strips on the second side to the mechanical properties of the board can be measured. The board may have a flexural modulus in the range of 1000-1500 MPa (N/mm²). The maximum load (bending at break) may be in the range of 1000-1500 N. Deflection at 500 N load may be in the range of 3-10 mm. These may be determined according to EN 15534

The body may contain one or more installation groove(s) or one or more protrusion(s), for example one or more protrusion(s) arranged to fit to one or more installation groove(s) in another board. These may be on the third and/or fourth side(s) of the body. When two or more similar boards are installed, for example in a form of decking boards when building a deck, the boards may be installed next to each other. In one example the separate boards touch each other and the boards may contain compatible parts, such as shapes, on the third and the fourth sides. In one example an installation groove on a third side of a board is designed to fit to an installation protrusion on a fourth side of another board. In another example, as illustrated in Figure 5, a gap is left between two adjacent boards 42, 44 and an installation fastener 40 is placed between the two boards in such way that protruding parts of the fastener 40 will enter the installation grooves on the both third and the fourth sides of the boards 42, 44, and the fastener 40 is attached to a background or a support. An example of such a fastener is a T-clip used for installing decking boards, which clip 40 may be secured to a support with a screw 46. The gap between the two adjacent boards may be in the range of 5-10 mm, such as about 6 mm.

In one embodiment the body contains at least one installation groove on at least one side. In one embodiment the body contains at least one installation protrusion on at least one side. The installation grooves and/or protrusions are directed along the lengthwise direction of the body. In one example the body contains at least one installation groove on the third side and at least one installation groove on the fourth side, as shown in Figure 1.

When two or more boards 42, 44 are installed adjacent to each other, for example in the case of decking boards, it may be desired that the parts which remain visible are be covered with the coating layer to prevent the visibility of the naked composite body, which may be of different color than the coating layer. It may be also desired that uncoated parts are not exposed to direct sunlight. Therefore the coating on the first side of the board may continue to the third and/or fourth side(s) of the board. This ensures that the visual appearance of the final installation is perfect and the composite body itself is not visible. Further, this ensures that mainly the coated parts including UV protection are exposed to direct sunlight, which enhances the design life of the board. The third and/fourth side(s) of the board should be coated to such extent that when the installed boards are viewed or exposed from an angle α, as illustrated in Figure 5, only or substantially only the coating layer can be seen or is exposed to direct sunlight. The parts at the bottom of the gap between the adjacent boards are probably not well visible, so the coating should continue for example to the middle of the third and/or fourth side(s) of the board.

In one embodiment the polymeric coating layer on the first side continues partly onto a third and/or fourth side(s) of the body, for example to the middle of the third and/or fourth side, or to the installation groove, such as to the upper edge of the installation groove, or to the installation protrusion, such as to the upper edge of the installation protrusion, in general including the upper side of the protrusion, on the third and/or fourth side. Figures 1 and 2 show examples wherein the coating continues to the upper edge of the installation groove. In one example, when viewing two or more boards installed adjacent to each other with a gap in the range of 5-10 mm between the boards at an angle α of at least 50°, or at least 60°, or at least 70° to the plane of the boards, the visible parts of the third and/or fourth side(s) of the body are coated with the polymeric coating. When the sun is shining from said angles to the installed boards, especially to a decking floor, only coated parts of the boards should be enlightened with or exposed to the sunlight.

The material of the coating is much harder than the composite body. This provides for example scratching resistance, but on the other hand the fastening of the board may be easier when it is made to the softer material, i.e. to the body. Therefore the coating should not preferably be present at the area used for fastening purposes, such as in the installation groove, or at least at the lower part of the installation groove. Figure 5 illustrates this situation. When the fastener 40 is applied into the installation grooves and the fastener is fastened to the background by using a screw 46, the screwing applies force via the fastener especially against the lower surface of the installation groove which is parallel to the first and second sides and closer to the second side, and which should therefore be uncoated.

Figure 2 shows a photo of a cross section of a decking board, wherein the composite body 10 is made from recycled label waste. The board has an installation groove 26 on the third 16 and fourth 18 sides of the body, and the polymeric coating 20 on the first side 12 continues to the third 16 and fourth 18 sides to the upper part of the installation groove 26, i.e. the part of the installation groove closest to the first side 12. The second side 14 of the board contains three elongated protrusions 30, 31, 32. In each protrusion there is formed a groove having a width of about 10 mm for the coating strip 22. 23. 24, so the coating strips do not substantially form separate protrusions but follow the shapes of the protrusions formed from the composite material. The whole piece is manufactured by coextrusion in one step process.

In one embodiment the second side 14 of the body 10 comprises three elongated protrusions 20, 31, 32 along the lengthwise direction of the body 10, each elongated protrusion comprising a polymeric coating layer in the form of a strip 22, 23, 24 along the lengthwise direction of the body.

The board may be a building element, such as a decking board, other floor element or a façade panel, or a landscaping element. In an example, the board is a railing, a fence, or a noise barrier. The board may also be a product that is used to cover the surface of another product, such as a cover strip. The board may be an outdoor element. In one embodiment the board is a decking board.

One example provides a building comprising the elongated board comprising the natural fiber plastic composite body described herein. A building is a structure with a roof and walls standing more or less permanently in one place, such as a house or a shed. The building may comprise the board, wherein the board is fastened by the fastener in order to form a part of the building. A building may be a structure with a roof and walls standing permanently in one place, such as a house, shed, garage, factory, or the like. The board may be used as a façade element or panel in the building.

One example provides a terrace comprising the elongated board comprising the natural fiber plastic composite body described herein. A terrace is an external, raised, open, flat area in either a landscape near a building or as a roof terrace on a flat roof. A terrace may protrude from a building. The terrace may comprise the board, wherein the board is fastened by the fastener in order to form a part of the terrace. The board may be used as a floor element in the terrace.

### Examples

An elongated board according to Figures 1 and 2, which may be used as a decking board, was manufactured. The board comprised a composite body 10 comprising about 60% (w/w) of recycled label waste, about 30% (w/w) of recycled polyethylene plastics and about 10% (w/w) of talcum. The recycled label waste and the recycled plastics were provided as chaff, mixed with talcum and a small amount of additives, melted and formed into the body by using a coextrusion system with a specific die. The polymeric coating layer was formed simultaneously in the same coextrusion process. The polymeric coating comprised 99% (w/w) of high-density polyethylene and 1% (w/w) of binder, pigment, UV protection, and the like additives. In the Figure 2 it can be seen that the body 10 contains pieces of cellulosic material from the recycled label waste, which have mostly light color but also include colored parts (not visible in the grayscale image). The body 10 had three elongated protrusions 30, 31, 32 along the lengthwise direction of the body, each elongated protrusion comprising a polymeric coating layer in the form of a strip 22, 23, 24 along the lengthwise direction of the body. The average thickness of the polymeric coating 20 on the first side was about 1.5 mm, but it could be more at the third 16 and the fourth 18 sides, for example about 2-3 mm as can be seen in the cross section of the Figure 2.

The body had a width of 140±1 mm and a highest thickness or height of 25±0.5 mm including the polymeric coating. The protrusions 30, 31, 32 had a height of 9 mm from the lowest thickness of the second side 14 of the body 10. Each protrusion contained a groove having a width of 10 mm and a height of 2 mm, which groove was filled with the polymeric coating to form the polymeric coating strips 22, 23, 24 to the second side of the board. The flat part on the second side 14 between the elongated protrusions, wherein the body had a lowest thickness was about 20 mm.

On the middle of the third and fourth sides of the board there were two installation grooves 26 having a depth of about 11 mm measured from a center of a circle located at the bottom of the groove to the outer edge of the groove.

As a comparison, otherwise identical boards were coextruded as described in previous but without the polymeric coating layers in the form of strips on the second side of the body along the lengthwise direction of the body. It can be seen from Figure 3 that these boards had a very strong tendency to deform. On the contrary, the boards according to the embodiments did not have this tendency.

Bending strength (flexural strength) was measured for boards with and without the stripes at the second side according to 3 point bending test of EN15534 (Composites made from cellulose-based materials and thermoplastics (usually called wood-polymer composites (WPC) or natural fibre composites (NFC)). Test methods for characterisation of compounds and products). The results are presented in Table 1. N/mm² equals to MPa. Max load equals to bending at break, which indicates the bending strength.

**Table 1.**

| | Max load (N) | Max deflection (mm) | Deflection at 500 N load (mm) | Flexural modulus (N/mm²) |
|---|---|---|---|---|
| Without stripes | 650 | 46 | 21 | 500 |
| With stripes | 1200 | 34 | 7 | 1200 |

| | | | | |
|---|---|---|---|---|
| Friction of the material was measured with pendulum test according to EN15534: Polyethylene coating: Dry 63; wet 43 Core composite material: Dry 75; wet 34 | | | | |

## Claims

1. An elongated board comprising a natural fiber plastic composite body (10), the body having a first side (12) and a second side (14), the first side being completely coated with a polymeric coating layer (20) comprising at least one thermoplastic polymer, such as polyolefin, and the second side comprising at least two partial polymeric coating layers in the form of strips (22, 23, 24) along the lengthwise direction of the body.

2. The board of claim 1, wherein the second side of the body (10) comprises at least two elongated projections (30, 31, 32) along the lengthwise direction of the body.

3. The board of claim 2, wherein the at least two partial polymeric coating layers (22, 23, 24) are on at least two elongated protrusions (30, 31, 32) along the lengthwise direction of the body (10), for example in a groove on the elongated protrusions.

4. The board of claim 3, wherein the second side (14) of the body (10) comprises three elongated protrusions (30, 31, 32) along the lengthwise direction of the body, each elongated protrusion comprising a polymeric coating layer in the form of a strip (22, 23, 24) along the lengthwise direction of the body.

5. The board of any of the preceding claims, wherein the at least two partial polymeric coating layers in the form of strips (22, 23, 24) along the lengthwise direction of the body are arranged symmetrically on the second side (14) of the body.

6. The board of any of the preceding claims, wherein the natural fiber composite material comprises at least one thermoplastic polymer and wood fibers

7. The board of any of the preceding claims, wherein the natural fiber composite material comprises recycled material, such as recycled adhesive laminate waste, release material, recycled plastics, recycled wood-based particles, and/or deinking sludge.

8. The board of any of the preceding claims, wherein the natural fiber composite material comprises fiber comprising less than 1% (w/w) of lignin, such as fiber from kraft process.

9. The board of any of the preceding claims, wherein the body contains at least one installation groove (26) on at least one side.

10. The board of any of the preceding claims, wherein the polymeric coating layer (20) on the first side continues partly onto a third (16) and/or fourth (18) side(s) of the body.

11. The board of any of the preceding claims, wherein the at least two partial polymeric coating layers in the form of strips have a width in the range of 5-20 mm.

12. The board of any of the preceding claims, wherein the polymeric coating layers (20, 22, 23, 24) have a thickness in the range of 0.5-5 mm.

13. The board of any of the preceding claims manufactured with a coextrusion process.

14. The board of any of the preceding claims, wherein the board is a decking board.

15. A method for forming an elongated board comprising a natural fiber plastic composite body, the method comprising
- providing natural fiber plastic composite material,
- providing polymeric material,
- providing a coextrusion system,
- applying the natural fiber plastic composite material and the polymeric material to the coextrusion system, and
- coextruding the natural fiber plastic composite material and the polymeric material into an elongated board of any of the preceding claims comprising a natural fiber plastic composite body, the body having a first side and a second side, the first side being completely coated with a polymeric coating layer, and the second side comprising at least two partial polymeric coating layers in the form of strips along the lengthwise direction of the body.
